# EUROPEAN PATENT APPLICATION

(11) **EP 4 647 596 A1**
(43) Date of publication of application: **12.11.2025**
(21) Application number: 24174259.2
(22) Date of filing: 06.05.2024
(51) Int. Cl.: F03D 13/00, E02D 27/42

(54) **A METHOD FOR INSTALLING A WIND TURBINE**

(71) Applicant: Siemens Gamesa Renewable Energy A/S, 7330 Brande (DK)
(72) Inventor: Soerensen, Johnny, 6920 Videbaek (DK)
(74) Representative: SGRE-Association

(57) **Abstract**

A method for installing a wind turbine comprising a tower and a foundation is provided. The method comprises the steps of inserting at least one platform 4, 5, 6 in the tower 2, transporting the tower 2 with a transport system to a wind turbine installation site, mounting the tower 2 on the foundation 3 at the wind turbine installation site, activating the lowering means 7 through the activation means 8 to lower the at least one platform 4, 5, 6 into the foundation 3 by lowering means 7.

## Description

### FIELD OF THE INVENTION

The present invention relates to a method for installing a wind turbine having a foundation and a tower, the method comprising the steps of installing at least one platform in the tower and lowering the platform to the foundation.

### BACKGROUND OF THE INVENTION

Offshore wind turbines are typically placed on monopiles with or without transition pieces. The transition pieces may be empty or may carry the internal elements such as equipment, ladders and platforms which are required for the safe access and operation of the wind turbines. Wind turbines including floating wind turbines such as bottom fixed, monopile and jacket foundation.

A typical disadvantage of such known monopiles without transition piece is that the workers must go inside the tower and install the internal platforms and the equipment after the monopile has been installed on the empty foundation, which is a complex installation operation since the access is in the sea. Therefore, to perform the installation, a crane vessel is required, increasing the risk and the operation time.

It is therefore a goal of the present invention to provide a method to install at least one internal platform into the foundation of a wind turbine.

### SUMMARY OF THE INVENTION

The object of the invention is achieved by the independent claims. The dependent claims describe advantageous developments and modifications of the invention.

In accordance with the invention there is provided a method for installing a wind turbine comprising a foundation and a tower. The method comprising the steps of inserting at least one platform in the tower, transporting the tower with a transport system to a wind turbine installation site, mounting the tower on the foundation at the wind turbine installation site and activating the lowering means through the activation means to lower the at least one platform into the foundation by the lowering means.

The internal platforms are previously installed on the tower. Once the tower is installed on the empty foundation, the internal platforms are lowered into the foundation by the lowering means.

By performing this method, workers do not have to enter the tower to install the internal platforms. Furthermore, the crane vessel is no longer required, thus preventing to perform a risk operation in the sea and optimizing the operation time and resources.

The lowering means may be controlled remotely from the transport system.

By controlling the lowering means from the transport system, the workers may remain in the transport system saving time and increasing the safety by not being in the wind turbine installation site while the platforms are lowered from the tower to the foundation. The lowering means may be electrical winches.

The method may further comprise installing a lift in one of the at least one platform and connecting the lift to an extendable wire, rail or rack and pinion lift system.

By installing a lift, workers can easily switch platform and carry equipment therein.

The method may further comprise installing an electrical unit in at least one platform and connecting it to a cable.

The method may further comprise storing the electrical unit in the tower before being transported to the wind turbine installation site by the transport system.

By storing the electrical unit before transporting the tower, the transporting process is optimized since the tower is used as a transport container to transport the electrical unit, not requiring another transport system to carry the electrical unit. Also, workers save time by not having to move the electrical unit from the transport system to the wind turbine installation site.

The method may further comprise installing an additional platform with an opening to allow access to workers to perform tasks. The additional platform may be placed between two platforms and may have a ring shape.

As the additional platform may be placed between two platforms and has a ring shape, it will be easier for workers to carry out maintenance or installation tasks between these two platforms.

The method may further comprise installing at least one wire between at least two platforms.

The additional platform may be placed between the at least two platforms.

The additional platform may have a ring shape. The additional platform is an intermediate platform placed between two platforms. By having a ring shape, workers can walk in the additional platform and perform maintenance task between the at least two platforms e.g. arrangement of cables that pass from one platform to another.

The method may further comprises installing a seal between the foundation and the at least one platform to prevent gases from soil to enter inside the tower.

The seal may be an inflatable seal, a concrete seal, a resin seal or a silicone seal.

The method may further comprise arranging hanging means in at least one platform for hanging the cables.

The method may further comprise placing an access platform on the outside of the tower and an access door to access to the tower.

### BRIEF DESCRIPTION OF THE DRAWINGS

Embodiments of the invention are now described, by way of example only, with reference to the accompanying drawings, of which:
Figure 1 shows a wind turbine;
Figure 2 shows the inside of a tower with internal platforms; and
Figures 3a, 3b, 3c shows the inside of a tower with internal platforms.

The illustration in the drawings is in schematic form. It is noted that in different figures, similar or identical elements may be provided with the same reference signs.

### DESCRIPTION OF THE DRAWINGS

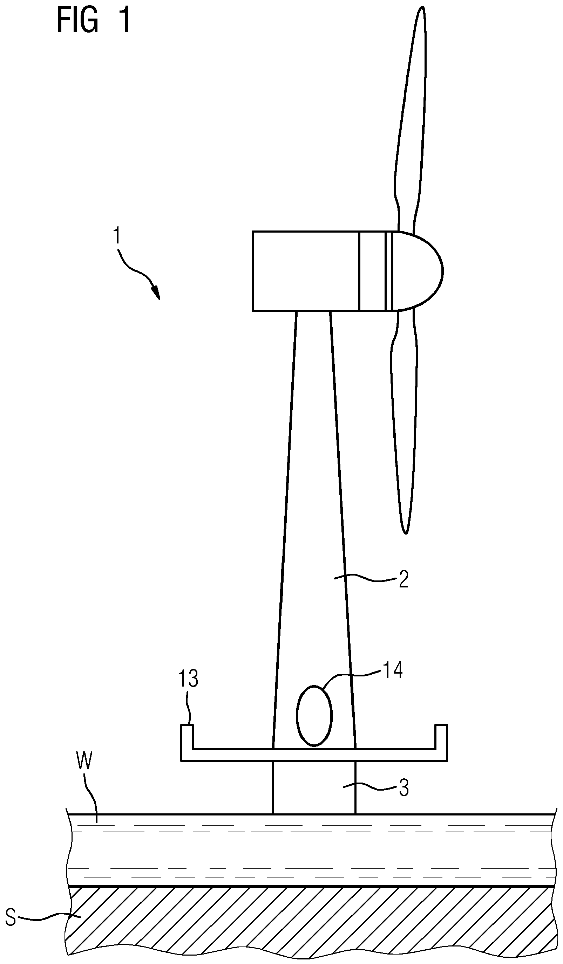

Fig. 1 shows an offshore wind turbine 1. The wind turbine 1 comprises a tower 2, a foundation 3, an access platform 13 and an access door 14. The wind turbine 1 is an offshore wind turbine 1 installed in the soil S of the sea surrounded by water W. Workers may arrive to the wind turbine 1 by a transport system e.g., a vessel and they may use the access platform 13 to perform maintenance task in the outer part of the wind turbine 1 and to access inside of the tower 2 through the access door 14.

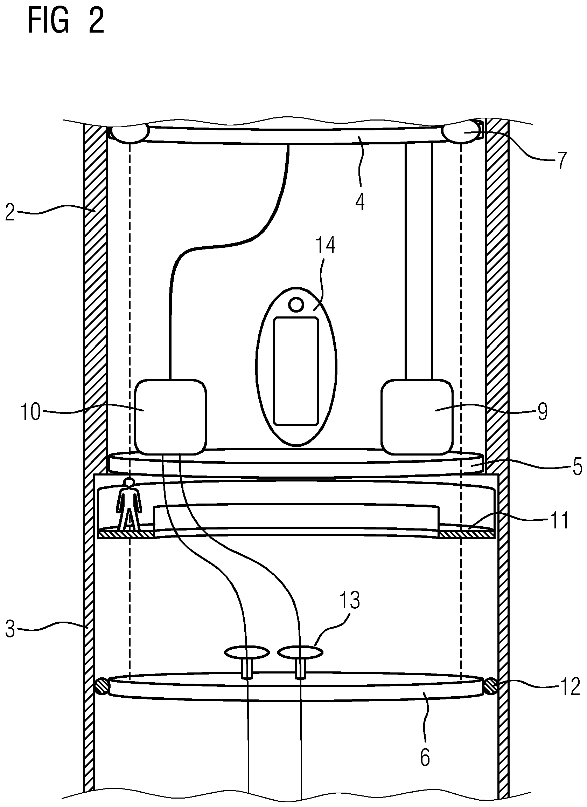

Fig. 2 shows the inside of the tower 2 and the foundation 3. The tower 2 is mounted on the foundation 3. The at least one of the platforms 4, 5 and 6 is arranged in the inside of the tower 2. Each platform 4, 5, 6 has its corresponding lowering means 7, which are arranged between the tower 2 and the corresponding platform 4, 5 and 6. In addition, each lowering means 7 has its corresponding activation means 8 (not shown). The activation means 8 may be a remote device which activate the lowering means 7, preferably electrical battery powered equipment. The lowering means 7 may be winches.

A lift 9 is installed in one of the at least one platform 4, 5 or 6 and/or the additional platform 11 and is connected to an extendable wire. The platforms 4, 5, 6 may have an opening, the lift 9 may pass through the opening, thus workers can move from one platform to another.

The electrical unit 10 is installed on the platform 5. Although, the electrical unit 10 may be installed in the platform 4 or 6. The electrical unit 10 may be a switchgear, junction box or other specific electrical module or component. The electrical unit 10 may be pre-connected to the tower 2, thereby the installation is faster in the wind turbine installation site, which may save cost and time. The electrical unit 10 may be pre-tested from onshore on the harbor. The electrical unit 10 may be stored in the tower 2 before being transported by the transport system to the wind turbine installation site. Once the tower 2 has been transported and arrive to the wind turbine installation site, the electrical unit 10 may be lowered into the foundation and properly installed.

An additional platform 11 is installed in the foundation 3. The additional platform 11 is a ring-shaped platform, which is a circular platform with an opening in the center to allow workers to walk around the additional platform and perform task between the platforms 5 and 6 e.g., such as cable inspection or operation of the electrical unit 10. A seal 12 is installed between the foundation 3 and the at least one platform 4, 5, 6. Each platform 4, 5, 6 has its corresponding seal 12. The seal 12 may be an inflatable seal, a concrete seal, a resin seal, or a silicone seal. The seal 12 prevents gases from soil to enter inside the tower 2.

A hanging means 13 are arranged in platform 6. Although, hanging means 13 may also be arranged on platform 4 or 5. The hanging means 13 may be placed to arrange the cables that are connected to the electrical unit 10 and pass through the opening of the additional platform 11 towards the hanging means 13. The access door 14 is arranged on the outside of the tower 2 to access inside the tower, preferably to the platform 5. Although, the access door 14 may have access to platform 4 or 6.

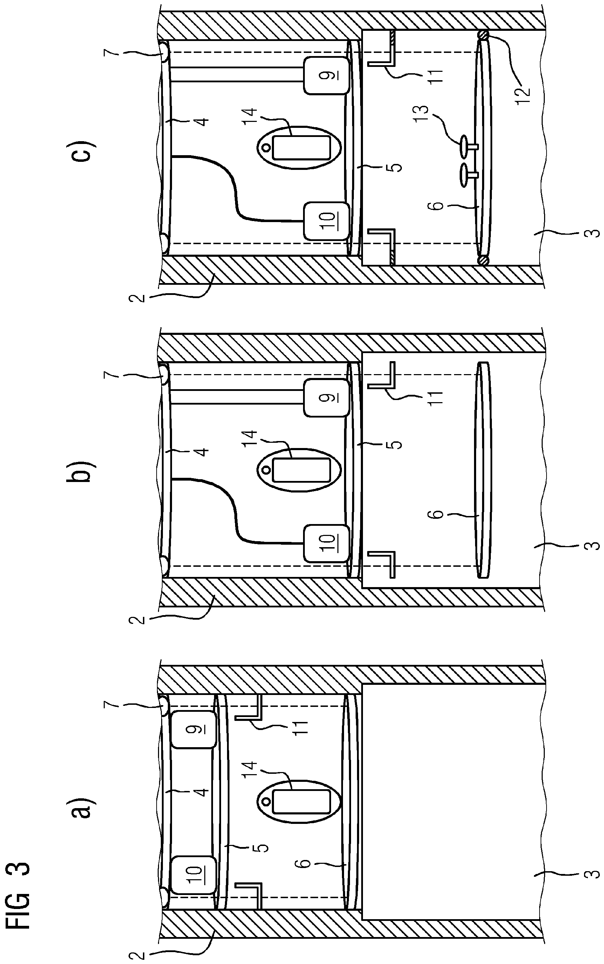

Fig. 3 a), b) c) shows the process of the method described by the claims. The at least one platform 4, 5, 6 and the additional platform 11 are installed on the tower 2 before being transported to the wind turbine installation site e.g., the at least one platform 4, 5, 6 may be installed on the manufacturing site, or on the deck. The lowering 7 means may also be installed between the tower 2 and the corresponding platform 4, 5, 6 and the additional platform 11. The tower 2 then may be transported to the installation site with a transport system e.g., a vessel.

The tower 2 is mounted on the foundation 3 as shown in Fig.3a). The electrical unit 10 and the lift 9 are installed on the platform 5, although they may be installed on the platform 4 or 6 if required. The access door 14 is arranged in the tower 2 to have access inside the tower 2.

Once the tower 2 is installed on the foundation 3, the platform 6 and the additional platform 11 are lowered to the foundation 3 through the lowering means 7 as shown in Fig. 3b). The lowering means 7 are activated by the activation means 8 (not shown) as described above. The platforms 4 and 5 may be lowered to the foundation 3 as well (not shown).

Afterwards, the seal 12 is installed between the foundation 3 and the platform 6 as shown in Fig. 3 c), to prevent gases from soil to enter inside the tower 2. The seal may also be installed between the platforms 4, 5 and the additional platform 11. The hanging means 13 are installed in the platform 6, although they may be installed in the platform 4 or 5 if required.

A monitoring and guide may be used to ensure at least one platform 4, 5, 6 and the additional platform are horizontal during traveling to the target position and preventing from getting stocked.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also, elements described in association with different embodiments may be combined. It should also be noted that reference signs in the claims should not be construed as limiting the scope of the claims.

## Claims

1. A method for installing a wind turbine 1 comprising a tower 2 and a foundation 3, the method comprising the steps of:
a) inserting at least one platform 4, 5, 6 in the tower 2,
b) transporting the tower 2 with a transport system to a wind turbine installation site,
c) mounting the tower 2 on the foundation 3 at the wind turbine installation site,d) activating the lowering means 7 through the activation means 8 to lower the at least one platform 4, 5, 6 into the foundation 3 by lowering means 7.

2. The method according to claim 2, wherein the lowering means 7 are controlled remotely from the transport system.

3. The method according to claim 3, wherein the lowering means 7 are electrical winches.

4. The method according to claim 1, wherein the method further comprises:
- installing a lift 9 in one of the at least one platform 4, 5, 6, and
- connecting the lift 9 to an extendable wire, rail or rack and pinion lift system.

5. The method according to any of the previous claims, wherein the method further comprises installing an electrical unit 10 in at least one platform 4, 5, 6 and connecting it to a cable.

6. The method according to any of the previous claims, wherein the method further comprises storing the electrical unit 10 in the tower 2 before step b).

7. The method according to any of the previous claims, wherein the method further comprises installing an additional platform 11 with an opening to allow access to workers to perform tasks.

8. The method according to claim 7, wherein the additional platform 11 is placed between the at least two platforms 4, 5, 6.

9. The method according to claim 6, wherein the additional platform 11 has a ring shape.

10. The method according to any of the previous claims, wherein the method further comprises installing at least one wire between at least two platforms 4, 5, 6.

11. The method according to any of the previous claims, wherein the method further comprises installing a seal 12 between the foundation and the at least one platform 4, 5, 6 to prevent gases from soil to enter inside the tower 3.

12. The method for installing a wind turbine according to claim 11, wherein the seal 12 is an inflatable seal, a concrete seal, a resin seal or a silicone seal.

13. A method according to any of the previous claims, wherein the method further comprises arranging hanging means 13 in at least one platform 4, 5, 6 for hanging the cables.

14. A method according to any of the previous claims, wherein the method further comprises placing an access platform 13 on the outside of the tower 2 and an access door 14 to access to the tower 2.
